# EUROPEAN PATENT SPECIFICATION

(11) **EP 0 326 665 B1**
(45) Date of publication and mention of the grant of the patent: **03.02.1993**
(21) Application number: 88119191.0
(22) Date of filing: 09.03.1984
(51) Int. Cl.: F16F 13/00, B60K 5/12

(54) **Vibration damping device**
Schwingungsdämpfungsvorrichtung
Dispositif amortisseur de vibrations

(30) Priority: 09.03.1983 JP 34453/83; 13.04.1983 JP 55002/83; 13.07.1983 JP 108449/83
(43) Date of publication of application: 09.08.1989
(73) Proprietor: BRIDGESTONE TIRE COMPANY LIMITED, Tokyo (JP)
(72) Inventor: Dan, Takuya, Yokohama City Kanagawa Pref. (JP); Kojima, Hiroshi, Yokohama City Kanagawa Pref. (JP); Orikawa, Michihiro, Yokohama City Kanagawa Pref. (JP)
(74) Representative: Whalley, Kevin

(56) References cited:
- EP-A- 0 040 290
- US-A- 2 808 131

## Description

This invention relates to a vibration damping device for damping vibrations from a vibration source.

Vibration damping devices, sometimes referred to as vibration isolators, are used for example as engine mountings for automobile vehicles, whereby vibrations from an internal-combustion engine are absorbed so as not to be transmitted to the vehicle chassis.

As a vibration damping device of this type, there has been proposed a vibration damping device comprising two vibration-damping fluid chambers separated by a partition having an orifice formed therein, in which vibrations from a vibration source are absorbed by the flow resistance to which the fluid is subjected when the vibration is transmitted to one chamber to thereby cause the fluid to flow from the one chamber to the other through the orifice.

Such a conventional vibration damping device is effective for damping vibrations of low frequency, but is not very effective against vibrations having a high frequency of, for example, about 50 Hz or more. In the latter case, since the amplitude of the vibration is small, the orifice becomes clogged, so that the internal pressure of the fluid chamber rises and also the spring constant increases. As a result, the vibration transmissibility increases to adversely affect the ride feeling of the vehicle.

A vibration damping device in accordance with the features defined in the preamble of the sole claim is known from EP-A-40290 which discloses a partition member provided with an orifice (or restricted passage) formed by lapping two plates. In such a partition member, each of the two plates is provided with a groove and a hollow portion (corresponding to the orifice) is formed by lapping the two plates so as to meet these grooves with each other, whereby the orifice is formed.

The present invention provides a vibration damping device comprising two vibration-damping liquid chambers, an elastic member adjacent to at least one of said two liquid chambers, and a partition member interposed between said two liquid chambers and provided with a restricted passage therein having a given length, wherein said partition member comprises a pair of lapped thin plate materials defining said passage therebetween, and each of said thin plate materials being provided with an opening communicating with said restricted passage, and the length of said restricted passage being adjustable to define an effective length by rotating one of said thin plate materials with respect to the other, characterized in that at least one of said thin plates is provided with a depression formed by stamping for defining said restricted passage in the lapping of said plate materials, said depression having a depth greater than the thickness of said thin plate material, and in that the sectional area of said restricted passage is constant over its length.

The invention will be further described, by way of example only, with reference to the accompanying drawings, wherein;
Figure 1 is a sectional view of a first embodiment of a vibration damping device, being not part of the invention;
Figure 2 is a sectional view illustrating the working state of the device shown in Figure 1;
Figure 3 is a sectional view of a second embodiment of a vibration damping device, being not part of the invention;
Figure 4 is a sectional view of a third embodiment of a vibration damping device, being according to the invention;
Figure 5 is a sectional view of an auxiliary vibration-damping unit used in the device of Figure 4;
Figure 6 is a plan view of a deformation-restricting member for an elastic sheet used in the unit of Figure 5;
Figure 7 is an exploded prespective view of a partition member used in the device of Figure 4; and
Figure 8 is a sectional view of a fourth embodiment of a vibration damping device, being according to the invention.

Like parts are designated by like numerals throughout the different figures of the drawings.

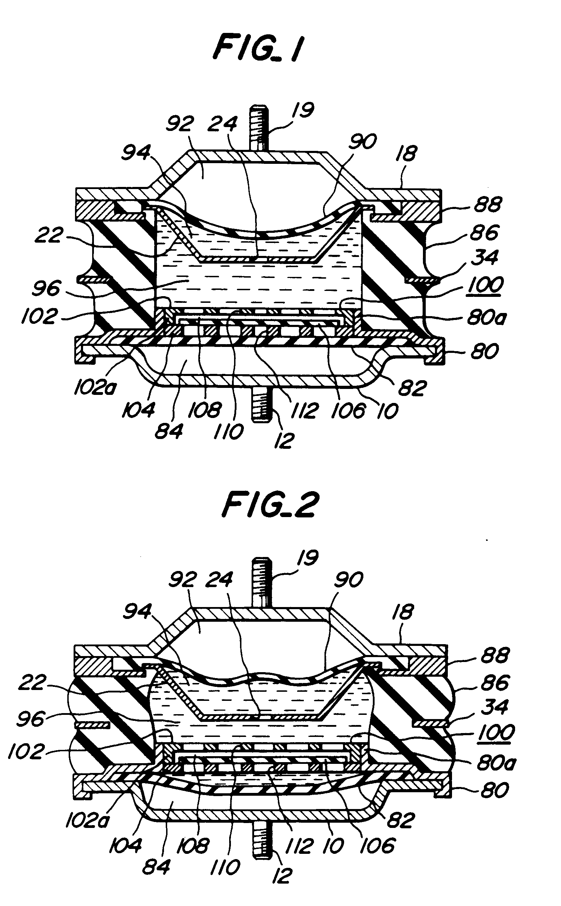

In Figures 1 and 2 is shown a first embodiment of a vibration damping device, being not part of the invention, which is used as an engine mounting for an automobile vehicle. This vibration damping device comprises a rigid disc 10 provided with a fitting bolt 12, which is fixed to a vehicle chassis (not shown).

In this embodiment, an annular plate 80 is fixed by caulking to the outer periphery of the disc 10 having a downwardly protruded central portion, while a diaphragm 82 composed of an elastic material is clamped at its outer periphery between the disc 10 and the annular plate 80. Thus, an air chamber 84 is defined between the central protruded portion of the disc 10 and the lower diaphragm 82, wherein the diaphragm 82 may be displaced so as to reduce the volume of the air chamber 84.

To the upper surface of the annular plate 80 is bonded by vulcanization the lower end portion of a cylindrical rubber member 86. As the member 86, other elastic material may be used instead of rubber. An annular plate 88 is bonded to the upper end portion of the cylindrical rubber member 86, while a disc 18 is fixed to the upper surface of the annular plate 88. The disc is is raised at its central portion and provided with a fitting bolt 19 for carrying and fixing to an engine (not shown).

Between the disc 18 and the annular plate 88 is clamped the outer periphery of a partition 22 through the rubber member 86, while a diaphragm 90 composed of an elastic material is clamped at its outer periphery between the partition 22 and the disc 18. Thus, an air chamber 92 is defined between the diaphragm 90 and the disc 18, wherein the diaphragm 90 may be displaced so as to enlarge and reduce the volume of the air chamber 92.

A damping liquid is filled in the space defined by the diaphragm 90, diaphragm 82 and rubber member 86 to form a fluid chamber. This fluid chamber is divided by the partition 22 into a chamber 94 and a chamber 96, which communicate with each other through a circular restricted passage in the form of an orifice 24 formed in the partition 22.

Upon the rising of ambient temperature, the boiling of the liquid is prevented by pressurising the fluid chambers 94, 96 by air in the chambers 92, 84 through the diaphragms 90, 82. However, each of these air chambers 92, 84 may communicate with the ambient air.

In this embodiment, an auxiliary vibration-damping unit 100 is arranged in the fluid chamber 96 subjected to vibration from the engine (not shown). The auxiliary vibration-damping unit 100 comprises a deformation-restricting member 102 provided at its outerperiphery with a downwardly projecting portion 102a, a deformation-restricting member 104, and an elastic sheet 106 interposed between the members 102 and 104.

Both of the members 102 and 104 are disc-type, and are closely fitted inside an upright portion 80a formed by bending the inner peripheral portion of the annular plate 80 upward. Moreover, the outer peripheral surface of the upright portion 80a is also bonded by vulcanization with the rubber member 86.

In the auxiliary unit 100, a displacement space 108 is defined between the members 102 and 104 by virtue of the downward projecting portion 102a.
Each of the members 102 and 104 is provided with a plurality of holes 110 and 112 for communicating the displacement space 108 with the fluid chamber 96. The elastic sheet 106 disposed in the displacement space 108 is a disc composed of an elastic material such as rubber, the thickness and outer diameter of which are smaller than those of the displacement space 108. Therefore, the elastic sheet 106 is freely movable in the displacement space 108.

In the auxiliary unit 100 of the above structure, the liquid filled in the fluid chamber 96 freely flows into the displacement space 108 through the holes 110 and 112. Moreover, in order to more facilities the flowing of the liquid in the space 108, the opposed surfaces of the members 102 and 104 facing the space 108 may be made rough or fine through-holes may be formed in the elastic sheet 106.

Furthermore, a ring member 34 is embedded in the outer peripheral portion of the rubber member 86 at the center in up and down direction so as to control the expansion of the outer diameter in the rubber member 86 within the required range.

When the vibration damping device of this embodiment is used as an engine mounting for an automobile vehicle (not shown), the weight of the engine is applied to the disc 18, whereby the liquid pressure in the fluid chambers 94 and 96 is increased as shown in Figure 2. That is, the pressure increase of the fluid chamber 94 pushes up the diaphragm 90 to reduce the volume of the air chamber 92, while the liquid in the fluid chamber 96 pushes down the diaphragm 82 through the holes 110, 112 in the auxiliary unit 100 by the pressure increase of the fluid chamber 96 to reduce the volume of the air chamber 84. Even at such a deformation state, the elastic sheet 106 is freely movable in the displacement space 108, so that it is never forced on the deformation-restricting member 102 or 104 by the pressure increase of the fluid chamber 96.

During the operation of the engine, vibrations generated from the engine are transmitted to the vibration damping device through the disc 18. Since the rubber member 86 in this device acts as a vibration-absorbing main body, the vibrations can be absorbed by the vibration-damping performance based on the internal friction of the rubber member 86. Moreover, when the vibration frequency is low, the liquid freely flows between the fluid chambers 94 and 96 through the orifice 24, during which low frequency vibration can be effectively absorbed by a damping action based on the viscosity resistance produced in the flowing of the liquid through the orifice 24. On the other hand, when vibrations generated from the engine have a high frequency of, for example, 50 Hz or more, since the amplitude of such vibrations is small, there is a possibility of producing clogging of the orifice 24. In this case, however, the elastic sheet 106 in the auxiliary unit 100 finely oscillates in the displacement space 108 to absorb the high frequency vibrations, so that there is caused no pressure increase of the fluid chamber 96 and also increase of the spring constant in the vibration damping device is suppressed effectively, resulting in adequate absorption of vibrations.

As mentioned above, vibrations having a wide frequency range can be absorbed by this vibration damping device also, so that the ride feeling of a vehicle can be improved considerably.

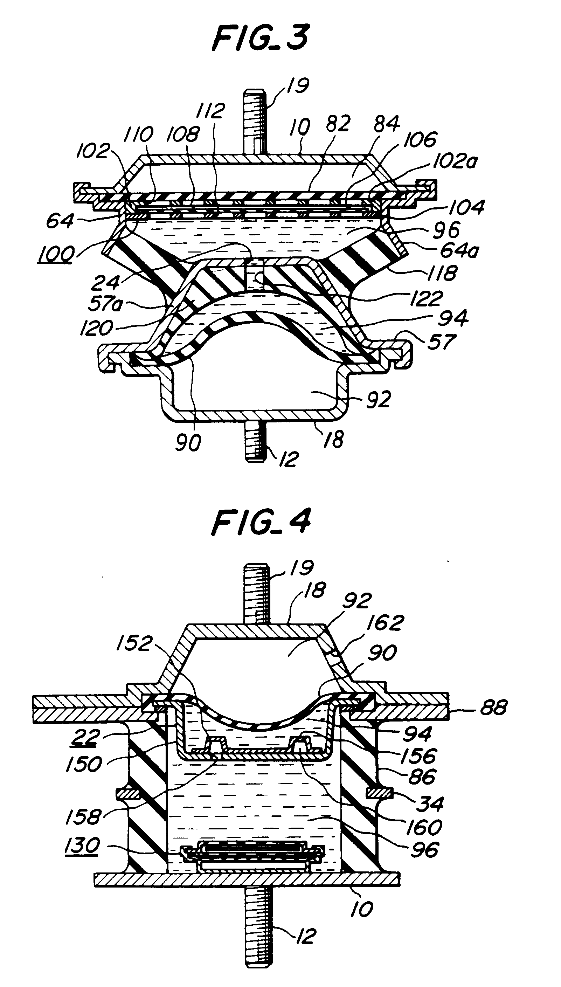

In Figure 3 is shown a second embodiment of a vibration damping device, being not part of the invention, wherein an inner shell 57 provided with an upright portion 57a is fixed by caulking at one end to the outer peripheral portion of a disc 18, and a diaphragm 90 is airtightly clamped at its outer periphery between the lower end of the upright portion 57a and the disc 18.

A rubber annular member 118 is bonded by vulcanization at its inner surface to the outer periperal surface of the upright portion 57a. The rubber member 118 extends upward in a tapered shape gradually in diameter and is bonded by vulcanization at its outer peripheral surface to the inner surface of a downward tapered portion 64a of an outer shell 64, which is fixed by caulking at the upper end thereof to the outer periphery of a disc 10. Further, a diaphragm 82 is clamped at its outer periphery between the outer shell 64 and the disc 10.

According to this embodiment, the vibration-damping fluid chamber 96 is defined by the diaphragm 82, the outer shell 64, the rubber member 118 and the central portion of the upright portion 57a of the inner shell 57, while the vibration-damping fluid chamber 94 is defined by the upright portion 57a of the inner shell 57 and the diaphragm 90. These two fluid chambers 94 and 96 communicate with each other through a restricted passage in the form of an orifice 24 formed in the central portion of the upright portion 57a.

In this vibration damping device, the auxiliary vibration-damping unit 100 is arranged in the fluid chamber 96 in such a manner that it is inserted into the inner peripheral surface of the outer shell 64 near the diaphragm 82. The structure and function of the auxiliary unit 100 are the same as in the embodiment described with reference to Figures 1 and 2.

A lining rubber 120 is bonded by vulcanization to the inner peripheral surface of the upright portion 57a so as to align a through-hole 122 formed in the central part of the lining rubber 120 with the restricted passage 24. In this case, the length of the restricted passage 24 can be optionally adjusted by varying the thickness of the lining rubber 120 at a position corresponding to the through-hole 122. Thus, a loss factor (tan δ) of the liquid can be increased by the total length of the through-hole 122 and the restricted passage 24, whereby the vibration-damping effect can be developed against vibrations having a wider frequency range.

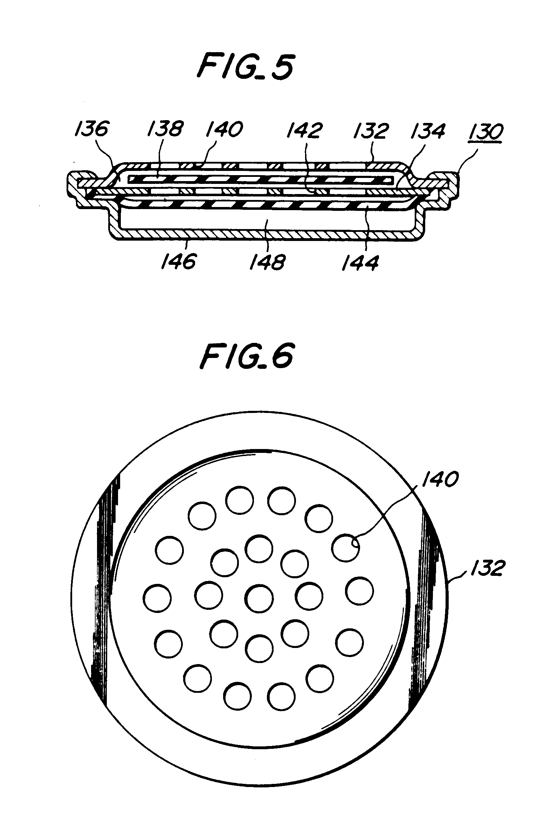

In Figure 4 is shown a third embodiment of a vibration damping device, being according to the invention, wherein an auxiliary vibration-damping unit 130 is placed on a disc 10 in a vibration-damping fluid chamber 96. The auxiliary unit 130 comprises a deformation-restricting member 132, a deformation-restricting member 134, and an elastic sheet 138 movably retained in a displacement space 136 defined between the members 132 and 134 as shown in Figures 5 and 6. Each of the members 132 and 134 is provided with a plurality of holes 140 and 142 for communicating the displacement space 136 with the fluid chamber 96.

In the auxiliary vibration-damping unit 130, a diaphragm 144 of disc type is arranged just below the member 134, and the diaphragm 144 and the member 134 are fixed at their outer peripheries together to the member 132 by caulking an outer peripheral end of a plate member 146, which is arranged below the diaphragm 144, to the upper member 132. Further, the central portion of the plate member 146 protrudes downward to define a closed air chamber 148 with the diaphragm 144. Thus, the closed air chamber 148 has the same action as the air chamber 84 described in the embodiments shown in Figures 1, 2 and 3.

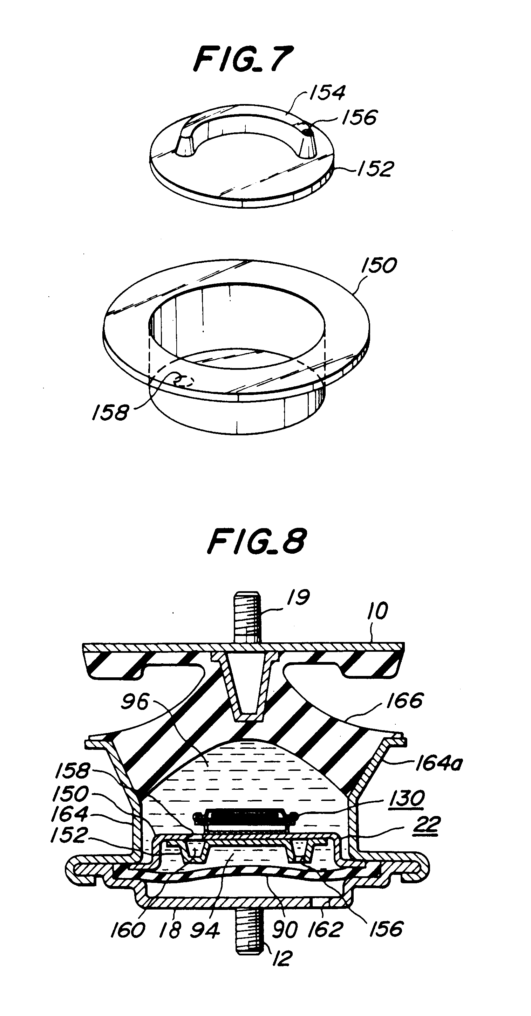

The partition 22 for separating the fluid chambers 94, 96 comprises a generally dished plate 150 shaped as shown and a disc-shaped body 152 shaped as shown in detail in Figure 7 . The disc-shaped body 152 is provided with an arc-shaped protrusion 154 formed by stamping for example, i.e. a semi-circular recess is formed in the disc-shaped body 152. Further, an opening 156 is formed in one end of the protrusion 154. The disc-shaped body 152 is fixed to the recessed bottom of the plate 150 (formed by stamping for example) in such a manner that the other end of the protrusion is located over a hole 158 formed in the plate 150. Thus, the recessed portion of the body 152 extending between the openings 156 and 158 forms a restricted passage 160, wherein the openings 156 and 158 communicate with the fluid chambers 94 and 96, respectively.
Moreover, the axial length of the restricted passage 160 can optionally be adjusted by axially changing the position of the opening 158 with respect to the recessed portion of the body 152.

As shown in Figure 4, an air hole 162 is formed in the disc 18.

In this vibration damping device, vibrations generated from the engine can be effectively absorbed in the same manner as described in the previously mentioned embodiments. That is, low frequency vibrations can be absorbed by the damping action based on the viscosity resistance caused in the flowing of the liquid through the restricted passage 160, while high frequency vibrations can be absorbed by the oscillation of the elastic sheet 138 in the auxiliary unit 130.

In Figure 8 is shown a fourth embodiment of a vibration damping device, being according to the invention, wherein a cylindrical shell 164 is fixed by caulking at one end to the outer periphery of a disc 18, and a rubber elastic member 166 is bonded by vulcanization at the lower and outer periphery thereof to the inner periphery of the upper part 164a of the cylindrical shell 164. The rubber member 166 is also bonded by vulcanization at the top surface thereof to a disc 10.Further, a partition 22 and a diaphragm 90 are clamped at their outer peripheries between the cylindrical shell 164 and the disc 18 as shown in Figure 8. Thus, a vibration-damping fluid chamber 96 is defined by the rubber member 166, the cylindrical shell 164 and the partition 22, while a vibration-damping fluid chamber 94 is defined between the partition 22 and the diaphragm 90.

The partition 22 has the same structure as shown in Figures 4 and 7 but in this embodiment the disc-shaped body is arranged in the chamber 94.

In this vibration damping device, the same auxiliary vibration-damping unit 130 as used in the embodiment of Figure 4 is mounted on the partition 22 so as not to obstruct the opening 158 of the plate 150, which protrudes upwardly in this case.

According to the invention, one or both of the deformation-restricting members for the elastic sheet used in the auxiliary vibration-damping unit may be a latticed plate body or a checkered plate instead of being a perforated plate.

As mentioned above, according to the invention described with respect to figures 4 to 8, the auxiliary vibration-damping unit is arranged in one of the two vibration-damping fluid chambers of the vibration damping device, which is subjected to vibrations generated from an engine when used as an engine mounting, so that vibrations having a wider frequency range can be effectively absorbed by the synergistic action of the two fluid chambers with the auxiliary vibration-damping unit.

## Claims

1. A vibration damping device comprising two vibration-damping liquid chambers (94, 96), an elastic member (86, 166) adjacent to at least one of said two liquid chambers, and a partition member interposed between said two liquid chambers and provided with a restricted passage (160) therein having a given length, wherein said partition member comprises a pair of lapped thin plate materials (150, 152) defining said passage therebetween, and each of said thin plate materials being provided with an opening (156, 158) communicating with said restricted passage, and the length of said restricted passage (160) being adjustable to define an effective length by rotating one of said thin plate materials with respect to the other, characterized in that at least one of said thin plates is provided with a depression (154) formed by stamping for defining said restricted passage (160) in the lapping of said plate materials (150, 152), said depression (154) having a depth greater than the thickness of said thin plate material, and in that the sectional area of said restricted passage is constant over its length.

## Patentansprüche

1. Schwingungsdämpfungsvorrichtung mit zwei schwingungsdämpfenden Flüssigkeitskammern (94, 96), einem an zumindest eine der zwei Flüssigkeitskammern angrenzenden elastischen Bauteil (86, 166), und einem zwischen den zwei Flüssigkeitskammern angeordneten und mit einem beschränkten Durchlaß (160) gegebener Länge versehenen Trennkörper, bei der der Trennkörper ein Paar sich überdeckender, dünner Plattenmaterialien (150, 152) aufweist, die den genannten Durchlaß zwischen sich begrenzen, und wobei jedes der dünnen Plattenmaterialien mit einer Öffnung (156, 158) versehen ist, die mit dem beschränkten Durchlaß in Verbindung steht, und wobei die Länge des beschränkten Durchlasses (160) zum Festlegen einer effektiven Länge durch Drehen eines der dünnen Plattenmaterialien bezüglich des anderen einstellbar ist,
**dadurch gekennzeichnet,**
daß zumindest eine der genannten dünnen Platten mit einer durch Pressen gebildeten Vertiefung (154) zum Festlegen des beschränkten Durchlasses (160) in der Überdeckung der Plattenmaterialien (150, 152) versehen ist, wobei die Vertiefung (154) eine Tiefe aufweist, die größer als die Dicke des genannten dünnen Plattenmaterials ist, und daß die Querschnittsfläche des beschränkten Durchlasses über seine Länge gleichbleibend ist.

## Revendications

1. Dispositif amortisseur de vibrations comprenant deux chambres de liquide d'amortissement de vibrations (94, 96), un élément élastique (86, 166) adjacent à au moins l'une desdites chambres de liquide, et un élément de cloisonnement interposé entre lesdites chambres de liquide et pourvu d'un passage restreint (160) d'une longueur donnée, ledit élément de cloisonnement comprenant une paire d'éléments de plaque fine (150, 152) se chevauchant, définissant entre eux ledit passage, chaque élément de plaque fine étant muni d'une ouverture (156, 158) communiquant avec ledit passage restreint, la longueur dudit passage restreint (160) étant réglable en vue de définir une longueur efficace en effectuant une rotation de l'un des éléments de plaque fine par rapport à l'autre, caractérisé en ce que l'un au moins desdits éléments de plaque fine est pourvu d'une dépression (154) formée par estampage pour définir ledit passage restreint (160) par le chevauchement desdits éléments de plaque (150, 152), ladite dépression (154) ayant une profondeur supérieure à l'épaisseur dudit élément de plaque fine, et en ce que ledit passage restreint présente une section de superficie constante sur toute sa longueur.
